# EUROPEAN PATENT APPLICATION

(11) **EP 0 851 656 A1**
(43) Date of publication of application: **01.07.1998**
(21) Application number: 96120755.2
(22) Date of filing: 23.12.1996
(51) Int. Cl.: H04N 1/00, H04N 7/26, H04N 7/30

(54) **System and method for high resolution video compression by tiling**

(71) Applicant: HE HOLDINGS, INC. dba HUGHES ELECTRONICS, Los Angeles, CA 90045-0066 (US)
(72) Inventor: Mead, Donald C., Carlsbad, California 92008 (US); Burns, Ronnie T., Irvine, California 92714 (US)
(74) Representative: Witte, Alexander, Dr.-Ing.

(57) **Abstract**

A system and method for communicating a high-resolution image represented by a digital video signal divide the image into a number of tiles (60) which are independently digitally encoded and multiplexed (80) to produce the digital video signal which is characterized by a substantially constant serial bitstream rate. A complexity measure (70) indicative of spatial frequency content of each tile may be used to provide a rate control signal for each encoder. The present invention utilizes standard encoders and decoders to implement a high-resolution video communication system capable of transmitting a digital video signal over a single transmission channel.

## Description

### Technical Field

The present invention relates to a system and method for communicating high resolution digital video signals.

### Background Art

Dissemination of information in an efficient and entertaining manner has long been a goal of broadcast media in general, and in particular, composite video information which includes images, text, and associated sound. The television receiver has become a ubiguitous fixture in homes, as well as many offices. Broadcasters have continued to develop general interest, and special interest programming to satisfy the demand for various types of information and entertainment.

The competition among broadcasters to deliver video information to their audiences has resulted in three primary color analog transmission standards in the television industry. Unfortunately, the three standards are incompatible for a number of reasons and are therefore limited to particular regional applications. The National Television Systems Committee (NTSC) standard is primarily utilized in North, Central, and South America in addition to Japan. The NTSC standard has also been adopted by a number of U.S. territories and possessions.

The NTSC standard has a nominal scanning rate of 60 Hertz (Hz) with 525 scanning lines per picture arranged such that the ratio of width to height (aspect ratio) is 4:3. However, since this standard utilizes 2:1 interlaced scanning, the actual video frame rate is 30 frames per second. The video signal including the associated sound is broadcast over channels of about 6 MHz bandwidth.

Another established television industry analog transmission standard used, for example, in England, is the phase alternation each line (PAL) standard. The sequential color and memory (SECAM) television transmission standard is used primarily in France and the former Soviet Bloc nations. These standards specify a resolution of 625 scanning lines per picture with a nominal scanning rate compatible with the common power supply of 50 Hz. These signals require a bandwidth of approximately 8 MHz, slightly larger than the NTSC signal bandwidth of 6 MHz.

More recently, a number of competing standards have emerged to provide higher resolution or definition than available with conventional television broadcasting systems. Some systems, such as used in Japan, simply double the number of scan lines in a frame and provide a modified aspect ratio of 16:9. However, this requires a communication channel having an increased bandwidth to maintain the frame rate of 30 frames per second. To achieve higher resolution, while maximizing the number of available channels in a particular area, various methods of signal compression are utilized. Even after compression though, these systems typically require a greater bandwidth than the lower resolution transmissions.

Increasingly more sophisticated microprocessors have facilitated use of digital video signals to improve image and sound quality while also providing enhanced information coding. However, a high-resolution, digital image requires an enormous bandwidth compared to the traditional lower-resolution analog signals. Therefore, as with analog high-definition television (HDTV) signals, digital signals also require significant compression prior to transmission. In fact, even normal resolution digital television requires compression to be practical.

Compressors and decompressors for high-resolution image sequences, such as HDTV, film, or the like, require a tremendous amount of computation. Due to the relatively low demand for HDTV and similar high-resolution services, and the fact that a standard has not been finalized in the United States, integrated circuit (IC) chip manufacturers have been reluctant to allocate the resources necessary to produce high-speed dedicated compressors and decompressors. Furthermore, low-volume production of such IC's will likely make them very expensive so as to reduce their viability for many applications. This situation probably will not change until the Federal Communication Commission (FCC) provides final approval of a HDTV standard in the United States.

### Summary Of The Invention

Thus, it is an object of the present invention to provide a system and method for communicating a high-resolution image represented by a digital video signal using standard off-the-shelf normal resolution encoders and decoders.

It is another object of the present invention to provide a system and method for communicating a high-resolution image which utilizes a complexity measure to characterize spatial frequency content of each sub-image so as to control bit allocation for the various sub-images.

It is a further object of the present invention to provide a system and method for communicating a high-resolution image which includes encoding and decoding the image in accordance with a recognized television industry transmission standard.

Yet another object of the present invention is to provide a system and method for communicating a high-resolution image represented by a digital video signal which is characterized by a substantially constant serial bitstream rate.

In carrying out the above objects and other objects and features of the present invention, a method is provided for communicating a high-resolution image represented by a digital video signal which includes representing the image with a number of independent digitally encoded sub-images, determining a complexity measure for each of the sub-images, and time division multiplexing the encoded sub-images to produce the digital video signal which is characterized by a substantially constant serial bitstream rate. The method may also include transmitting the digital video signal over a communication channel in accordance with a recognized television industry transmission standard, demultiplexing the video signal to produce a number of independent digitally encoded sub-images, decoding each of the sub-images, and combining the decoded sub-images to reproduce the high-resolution image. In one embodiment, the image is encoded and decoded according to the NTSC television industry transmission standard.

The present invention also provides a system for communicating a high-resolution image represented by a digital video signal. The system includes a plurality of standard digital encoders for encoding an independent sub-image of the high-resolution image and determining a complexity measure thereof. The system also includes a multiplexer in communication with the digital encoders for combining the encoded digital signals based on the corresponding complexity measures to produce the digital video signal which is characterized by a substantially constant serial bitstream rate. The system may also include a parser which synchronously communicates the independent sub-images to the various digital encoders. In one embodiment, the system includes a time division multiplexer which balances the bitstream rate from each digital encoder to maintain a predetermined desired bitstream rate for the compressed image, and to maximize the overall image quality.

The present invention also includes an encoder for generating a digital video signal characterized by a substantially constant serial bitstream representing a high-resolution image. The encoder includes a parser for dividing the high-resolution image into a number of sub-images, and a number of sub-encoders in communication with the parser for synchronously receiving the sub-images and generating a corresponding digital representation thereof. The digital representation includes a complexity measure indicative of spatial frequency content for each of the sub-images. The encoder also includes a multiplexer associated with the sub-encoders for multiplexing the digital representations based on the complexity measures to produce the substantially constant serial bitstream. In one embodiment, the multiplexer also provides a statistical rate control signal to each of the sub-encoders to control the rate of generation of the digital representations.

The present invention also includes a decoder for receiving a digital video signal characterized by a substantially constant serial bitstream representing a high-resolution image. The decoder includes a demultiplexer which separates the serial bitstream into a number of sub-images corresponding to the high-resolution image and sends corresponding signals to associated sub-decoders which then decode each of the sub-images. The decoder also includes a memory associated with the decoders for combining the sub-images to reproduce the high-resolution image.

The present invention provides a number of advantages over prior art systems and methods. The present invention utilizes separation of a high-resolution image in combination with statistical multiplexing based on sub-image complexity to simplify the implementation of high resolution video encoders. In addition, the present invention utilizes off-the-shelf encoders and decoders.

It should be noted that, while a significant advantage of the present invention is to utilize off-the-shelf hardward to compress/de-compress HDTV signals, the present invention also provides a generic method for solving a complex problem by dividing into more readily solved smaller problems. Thus, it is entirely consonant with the theory of parallel computation.

Thus, while the first application will be compressing and de-compressing HDTV signals with NTSC encoders and decoders, a subsequent realization of the present invention could compress 35 millimeter movies with HDTV encoders and decoders.

The above objects and other objects, features, and advantages of the present invention will be readily apparent by one of ordinary skill in this art from the following detailed description of the best mode for carrying out the invention when taken in connection with the accompanying drawings.

### Brief Description Of The Drawings

FIGURES 1a and 1b illustrate alternative tiling strategies for separating a high-resolution image into a number of sub-images according to the present invention;
FIGURE 2 is a block diagram of an encoder according to the present invention;
FIGURE 3 is a block diagram illustrating a decoder according to the present invention; and
FIGURE 4 is a diagrammatic representation of the steps performed in a system and method according to the present invention.

### Best Mode For Carrying Out The Invention

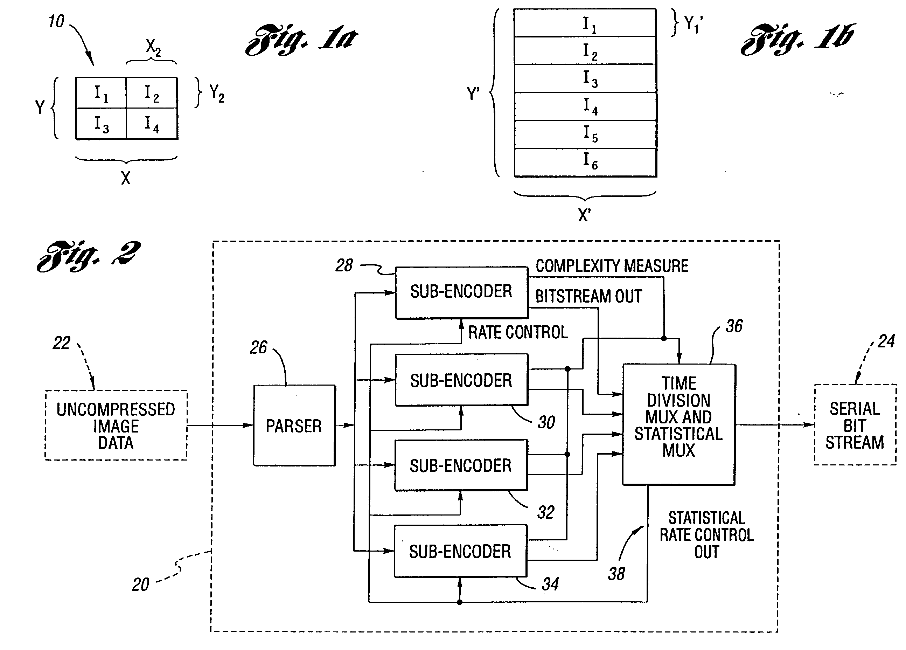

Referring now to Figure 1a, a high-resolution image, indicated generally by reference numeral 10, is divided into a plurality of sub-images or tiles I₁ through I₄. In one embodiment of the present invention, image 10 has a horizontal resolution x of 1440 pixels and a vertical resolution y of 960 pixels. Each tile, such as I₂, contains 720 horizontal pixels x₂ and 480 vertical pixels y₂.

Figure 1b illustrates an alternative tiling strategy according to the present invention. In this strategy, the horizontal resolution x' is equal to 1920 pixels while the vertical resolution y' is equal to 1080 pixels. Accordingly, each tile or sub-image, such as sub-image I₁, is defined by y'₁ vertical pixels and x' horizontal pixels where y'₁ is equal to y pixels.

Referring now to Figure 2, a block diagram of an encoder according to the present invention is shown. Encoder 20 receives uncompressed image data 22 which is preferably a formatted digital image, such as a HDTV frame. Encoder 20 converts uncompressed image data 22 into a digital video signal represented by a serial bitstream 24 which is characterized by a substantially constant bitstream rate. Encoder 20 includes a parser 26 which receives the uncompressed image data 22 and synchronously sends portions of the image to independent and separate sub-encoders 28-34. Of course, the embodiment illustrated in Figure 2 corresponds to the tiling strategy illustrated in Figure 1a. An encoder implementing the strategy of Figure 1b would thus include six individual and separate sub-encoders. Similarly, this concept can be applied to various numbers of sub-images which combine to form the high-resolution image.

The sub-encoders 28-34 utilize any of a number of known encoding techniques to compress the video data. Preferably, NTSC sub-encoders are utilized. Of course, other sub-encoders complying with established industry transmission standards may be utilized as well. Each sub-encoder, such as sub-encoder 28, also generates a complexity measure indicative of the spatial frequency content of its current sub-image. The digitally encoded signal along with the complexity measure is communicated to time division and statistical multiplexers 36. The complexity measure provides some indication of the level of detail contained within a particular sub-image. Based on this information, multiplexers 36 generate a statistical rate control signal 38 which provides a feedback signal for the various sub-encoders 28-34. The statistical rate control signal 38 controls the rate of the digitally encoded output from each sub-encoder. This allows more of the signal bandwidth to be allocated to those sub-encoders which are encoding a relatively more complex video image. This arrangement improves resolution of detailed areas while maintaining a substantially constant serial bitstream rate. The time division multiplexer 36 combines the various digitally encoded bitstreams into a single serial fixed rate bitstream 24 for transmission over the communication channel.

Any of a number of known techniques may be utilized to generate the complexity measure. For example, a discrete cosine transform (DCT) may be utilized to represent the spatial frequency content of each sub-image. However, an encoder utilizing off-the-shelf components to generate a video signal which may be communicated over a single standard-bandwidth channel, with or without rate control, is within the contemplation of the present invention. A software simulation of the present invention without rate control provided satisfactory results where each tile was allocated bandwidth corresponding to a data transfer rate of 2 Mb/s.

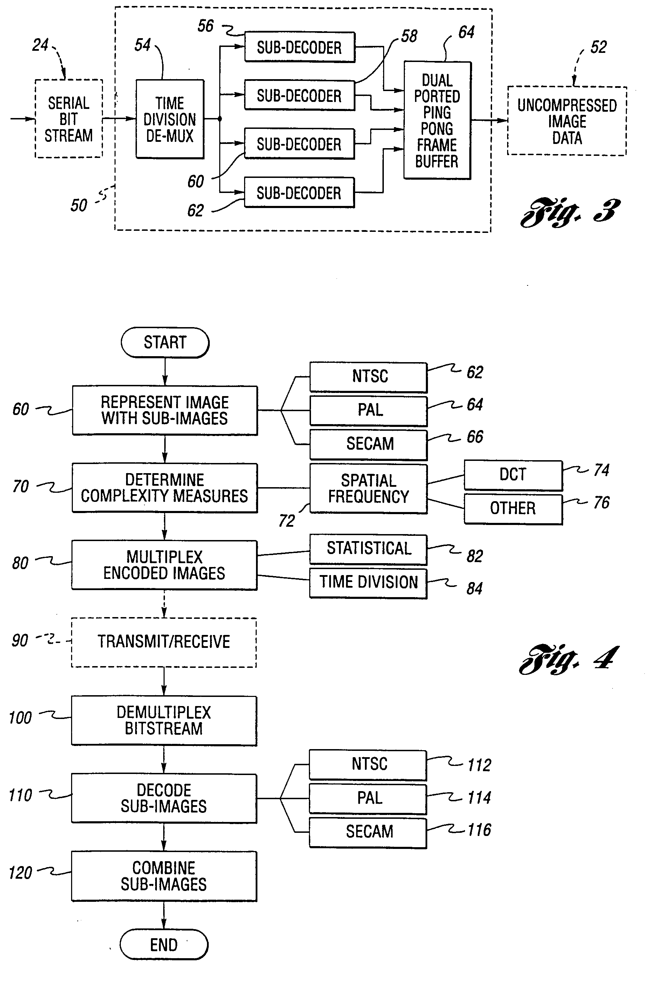

Referring now to Figure 3, a block diagram illustrating a decoder according to the present invention is shown. Decoder 50 converts serial bitstream 24 into uncompressed image data 52. In essence, decoder 50 reverses the process performed by an encoder, such as encoder 20. Decoder 50 includes a time-division demultiplexer which directs the appropriate sub-image to one of the plurality of sub-decoders 56-62. Each sub-decoder, such as sub-decoder 56, then decompresses its corresponding sub-image and communicates the data to a dual-port memory 64. The memory or frame buffer combines the various sub-images to create the digital uncompressed image data 52 which may then be converted to an analog signal for driving an appropriate display device, such as a television or monitor.

In a preferred embodiment, sub-decoders 56-62 are NTSC decoders. Also in a preferred embodiment, memory 64 is a dual-port, ping-pong frame buffer. One port of the frame buffer is utilized to drive the screen display, while the other port is being loaded by the various sub-decoders 56-62. Of course, the decoder illustrated in Figure 3 corresponds to a tiling strategy as illustrated in Figure 1a. Also, the particular construction of decoder 50, relative to the number of sub-decoders, should match the construction of encoder 20 for proper operation. The decoder architecture illustrated in Figure 3 may also be extended to decoders having various off-the-shelf components arranged in a similar fashion.

Referring now to Figure 4, a diagrammatic representation of a system and method according to the present invention is shown. A high-resolution image is divided into a plurality of sub-images as represented by block 60. Preferably, the step includes parsing the high-resolution image and encoding the image according to an established television industry transmission standard, such as NTSC (represented by block 62), PAL (represented by block 64), or SECAM (represented by block 66).

A complexity measure for each sub-image is determined as represented by block 70. Preferably, the complexity measure is indicative of the spatial frequency content of each sub-image as represented by block 72. As is known, the spatial frequency may be captured utilizing a discrete cosine transform (DCT), as represented by block 74 among many other techniques, represented by block 76.

With continuing reference to Figure 4, each digitally encoded sub-image is multiplexed as represented by block 80 which may include statistical multiplexing, represented by block 82, and/or time division multiplexing as represented by block 84. Statistical multiplexing utilizes the complexity measure as determined by block 70 to reallocate signal bandwidth to those sub-images having greater complexity, i.e., higher spatial frequencies. The result of block 80 is a serial bitstream capable of transmission over a single broadcast channel and characterized by a substantially constant bitstream rate.

The serial bitstream is transmitted over a communication medium, such as coaxial cable, fiberoptic cable, twisted pair cable, or through the atmosphere, as represented by block 90. The transmitted signal is then received by one or more receivers having a decoder, such as the decoder of Figure 3.

The bitstream is demultiplexed as represented by block 100, which directs the various sub-images to corresponding sub-decoders. Block 110 represents decoding of the sub-images which may be in accordance with NTSC as represented by block 112, PAL as represented by block 114, or SECAM as represented by block 116, depending on the particular standard utilized to transmit the digital bitstream as represented by block 60.

The decompressed sub-images or tiles are recombined as represented by block 120 to reproduce an uncompressed high-resolution image.

It is understood, of course, that while the forms of the invention herein shown and described include the best mode contemplated for carrying out the present invention, they are not intended to illustrate all possible forms thereof. It will also be understood that the words used are descriptive rather than limiting, and that various changes may be made without departing from the spirit or scope of the invention as claimed below.

## Claims

1. A method for communicating a high-resolution image represented by a digital video signal, the method comprising:
representing the image (60) with a first plurality of independent digitally encoded sub-images;
determining a complexity measure (70) for each of the first plurality of independent digitally encoded sub-images; and
multiplexing the first plurality of independent digitally encoded sub-images (80) to produce the digital video signal which is characterized by a substantially constant serial bitstream rate.

2. The method of claim 1 wherein the step of multiplexing comprises time-division multiplexing (84).

3. The method of claim 2 wherein the step of multiplexing comprises statistical multiplexing (82) based on the complexity measures and the substantially constant serial bitstream rate.

4. The method of claim 1 further comprising:
demultiplexing the video signal (100) to produce a second plurality of independent digitally encoded sub-images corresponding to the first plurality;
decoding each of the second plurality of sub-images (110); and
combining the second plurality of sub-images (120) to reproduce the high-resolution image.

5. The method of claim 1 wherein the step of determining a complexity measure comprises determining spatial frequency content of each of the first plurality of sub-images.

6. The method of claim 5 wherein the step of determining spatial frequency content comprises determining a discrete cosine transform (74) for each of the first plurality of sub-images.

7. A system for communicating a high-resolution image represented by a digital video signal, the system comprising:
a plurality of digital encoders (28-34) wherein each of the plurality encodes an independent sub-image of the high-resolution image and determines a corresponding complexity measure thereof;
a multiplexer (36) operatively associated with the plurality of digital encoders wherein the multiplexer combines signals from the plurality of digital encoders based on the corresponding complexity measure to produce the digital video signal which is characterized by a substantially constant serial bitstream rate.

8. The system of claim 7 further comprising
a parser (26) operatively associated with the plurality of digital encoders wherein the parser synchronously communicates the plurality of independent sub-images to the plurality of digital encoders.

9. The system of claim 7 wherein the multiplexer comprises a time-division and statistical multiplexer.

10. An encoder (20) for generating a digital video signal characterized by a substantially constant serial bitstream representing a high-resolution image, the encoder comprising:
a parser (26) for dividing the high-resolution image into a plurality of sub-images;
a plurality of sub-encoders (28-34) operatively associated with the parser for synchronously receiving the plurality of sub-images and generating a corresponding digital representation thereof wherein the digital representation includes an associated complexity measure indicative of spatial frequency content of the plurality of sub-images; and
a multiplexer (36) operatively associated with the plurality of sub-encoders for multiplexing the plurality of digital representations based on the associated complexity measures to produce the substantially constant serial bitstream.

11. The encoder (20) of claim 10 wherein the multiplexer (36) also provides a statistical rate control signal (38) to each of the plurality of sub-encoders (28-34) for controlling rate of generation of the digital representations.

12. The encoder (20) of claim 10 wherein the complexity measure comprises a discrete cosine transform.

13. A decoder (50) for receiving a digital video signal characterized by a substantially constant serial bitstream representing a high-resolution image, the decoder comprising:
a demultiplexer (54) operatively associated with a communication channel carrying the digital video signal for demultiplexing the video signal to produce a plurality of independent digitally encoded sub-images corresponding to the high-resolution image;
a plurality of sub-decoders (56-62) operatively associated with the demultiplexer for decoding each of the plurality of sub-images; and
a dual-port memory (64) operatively associated with the plurality of decoders for combining the sub-images to reproduce the high-resolution image.
